# FASCICULE DE BREVET EUROPEEN

(11) **EP 2 889 439 B1**
(45) Date de publication et mention de la délivrance du brevet: **21.09.2016**
(21) Numéro de dépôt: 14198404.7
(22) Date de dépôt: 17.12.2014
(51) Int. Cl.: E04C 5/12

(54) **Dispositif d'ancrage avec entretoise pour armatures de cerclage**
Verankerungsvorrichtung mit Verstrebungen für kreisförmige Bewehrungen
Anchoring device with spacer for strapping frames

(30) Priorité: 24.12.2013 FR 1363546
(43) Date de publication de la demande: 01.07.2015
(73) Titulaire: Soletanche Freyssinet, 92500 Rueil Malmaison (FR)
(72) Inventeur: Zivanovic, Ivica, 95400 Arnouville (FR); Carry, Antoine, 78000 Versailles (FR); Solet, Ronan, 92310 Sevres (FR)
(74) Mandataire: Cabinet Plasseraud

(56) Documents cités:
- WO-A1-02/075069
- GB-A- 1 573 307

## Description

La présente invention est relative aux dispositifs d'ancrage pour ancrer des armatures de cerclage autour d'une structure à contraindre.

Plus particulièrement, l'invention se rapporte à un dispositif d'ancrage de deux armatures de précontrainte pour appliquer une contrainte de cerclage à une structure tubulaire à contraindre, chacune des armatures présentant une portion principale de serrage qui entoure la surface de la structure à contraindre sur au moins un tour, une première extrémité et une seconde extrémité, et un bloc d'ancrage dans lequel sont ancrées les première et seconde extrémités de chaque armature.

Une telle configuration est connue du document FR2822177 (alias WO02075069), décrivant un dispositif d'ancrage selon le préambule de la revendication 1.

Toutefois, dans la configuration décrite, lorsque l'on met en tension les armatures, le bloc d'ancrage exerce une pression radiale vers l'intérieur sur la structure à contraindre, et cette pression peut s'avérer ponctuellement supérieure à la pression répartie exercée par les armatures.

Cet inconvénient s'avère particulièrement gênant lorsque l'on désire contraindre une structure tubulaire dont la paroi est élancée comme un tuyau d'épaisseur modérée ou plus généralement une structure complexe ayant une paroi peu épaisse.

Il est par conséquent apparu un besoin de proposer des solutions pour pouvoir contraindre une structure convexe et en particulier cylindrique, à paroi peu épaisse, en évitant de créer une singularité (une concentration) de pression radiale à l'endroit du bloc d'ancrage.

À cet effet il est proposé un dispositif d'ancrage d'au moins deux armatures de précontrainte pour appliquer une contrainte de cerclage à une structure tubulaire à contraindre, au moins partiellement cylindrique d'axe X, chacune des armatures présentant :
- une portion principale de serrage qui entoure et porte sur la surface de la structure à contraindre sur N tours, N étant un entier non nul,
- une première extrémité agencée au bout d'une première portion d'extrémité qui prolonge la portion principale d'un côté,
- une seconde extrémité agencée au bout d'une deuxième portion d'extrémité qui prolonge la portion principale d'un autre côté.

Le dispositif d'ancrage comporte une entretoise comprenant un corps principal et au moins deux paires d'orifices d'ancrage pour recevoir et ancrer les deux extrémités de chaque armature, la première extrémité étant ancrée dans une première portée d'ancrage, et la seconde extrémité étant ancrée dans une seconde portée d'ancrage, l'entretoise étant agencée symétriquement de part et d'autre d'un plan médian PM de l'entretoise disposé perpendiculairement à l'axe X.

La première portion d'extrémité s'étend depuis un plan radial PR, parallèle à l'axe X et le contenant, où l'armature est tangente à la surface de la structure puis s'écarte de la surface de la structure depuis ledit plan radial jusqu'à la première portée d'ancrage, et la seconde portion d'extrémité s'étend, à l'opposé de la première, depuis le plan radial où l'armature est tangente à la surface de la structure puis s'écarte de la surface de la structure depuis ledit plan radial jusqu'à la seconde portée d'ancrage.

Il en résulte que les portions d'extrémité sont soumises, au voisinage du plan radial PR, à un effort qui reste purement circonférentiel et qu'en conséquence le dispositif d'ancrage n'exerce pas de pression radiale additionnelle sur la structure à contraindre.

Grâce à ces dispositions, on obtient le résultat avantageux que la résultante des forces exercées par les portions d'extrémité sur l'entretoise ne comporte aucune composante radiale, et par conséquent on peut considérer que l'entretoise est 'flottante', c'est-à-dire sans appui significatif sur la surface de la structure.

Dans divers modes de réalisation de l'invention, on peut éventuellement avoir recours en outre à l'une et/ou à l'autre des dispositions suivantes.

Avantageusement, la première portée d'ancrage est formée par un premier orifice d'ancrage et la seconde portée d'ancrage est formée par un second orifice d'ancrage ; de sorte qu'il est commode d'installer des moyens d'ancrage fiables et robustes comme des mors d'ancrage coniques, pour une armature de section sensiblement circulaire.

Le plan radial peut avantageusement se trouver à mi-distance des premier et second orifices d'ancrage ; moyennant quoi on obtient une configuration géométrique équilibrée de part et d'autre du plan radial avec un accès similaire aux première et deuxième extrémités de l'armature.

On peut définir un plan tangent perpendiculaire au plan médian et au plan radial et adjacent à la surface de la structure, et le premier orifice d'ancrage étant centré sur un premier axe d'ancrage et le second orifice d'ancrage étant centré sur un second axe d'ancrage, les premier et second axes d'ancrage étant angulairement espacés du plan tangent au plus d'un angle de 30 degrés. Moyennant quoi on peut choisir les axes d'ancrage de façon optimale pour faciliter l'accès aux orifices d'ancrage, notamment pour l'installation de l'outillage de mise en tension.

Les premier et second axes d'ancrage peuvent être colinéaires et parallèles au plan tangent PT ; de sorte que l'entretoise est une pièce relativement simple et facile à fabriquer.

Les premier et second axes d'ancrage peuvent être agencés à l'opposé de la structure à protéger par rapport au plan tangent, angulairement espacés par rapport au plan tangent d'un angle compris entre 0° et 20° ; de sorte que l'on facilite l'accès à l'outillage d'application de la précontrainte tel que vérin ou autre, sans pour autant créer des efforts radiaux ou des contraintes de cisaillement trop importantes dans l'entretoise.

Les premier et second orifices d'ancrage peuvent être agencés à distance dans une direction substantiellement circonférentielle, séparés par une distance prédéterminée supérieure à Emin. Moyennant quoi l'espace disponible autour des orifices d'ancrage est de taille suffisante, et on peut ainsi faciliter l'accès de l'outillage aux orifices d'ancrage.

Le corps de l'entretoise peut présenter une face concave tournée vers la structure à contraindre, avec un rayon de courbure R1 supérieur ou égal au rayon de courbure R de la surface de la structure au voisinage du plan tangent. Cela facilite les opérations de mise en position préalable à la mise en tension, sans créer de contrainte ponctuelle sur la surface 30 de la structure après mise en contrainte.

Chaque armature peut être un toron métallique à 7 fils, entouré d'au moins une gaine extérieure (matériau plastique type PEHD) portant sur la surface à contraindre, avec un produit de lubrification interposé qui permet au toron de coulisser facilement par rapport à ladite gaine extérieure. Le toron est graissé pour protection et lubrification puis gainé. Ce toron gainé peut être lui-même enfilé dans une gaine générale de protection (matériau plastique type PEHD) et l'espace entre la gaine extérieure et le toron gainé peut être injecté généralement avant la mise en tension avec un produit de remplissage (type coulis de ciment). On propose ainsi une solution performante et maîtrisée comme moyen de précontrainte de cerclage, le bon coulissement du toron dans la gaine et l'injection de l'espace annulaire entre l'armature et la gaine générale permettant une mise en contrainte homogène et uniforme.

En outre, on peut prévoir un méplat pour appuyer sur la surface et on assure ainsi une bonne répartition des efforts grâce au méplat de la gaine.

Chaque armature fait avantageusement exactement deux tours, soit N=2, et le corps principal de l'entretoise comprend une gorge formant passage disposée axialement entre les premier et second orifices d'ancrage. Ceci permet de mieux répartir les contraintes radiales sur la surface de la structure à contraindre et d'apporter une densité de précontrainte supérieure pour une même pièce d'ancrage, au surplus sans croisement d'armatures.

L'entretoise peut être une pièce monobloc métallique, par exemple en fonte. Moyennant quoi, une telle entretoise est suffisamment solide pour supporter des efforts de réaction de la précontrainte très importants.

L'invention vise également une entretoise d'ancrage spécialement apte et destinée à former un dispositif d'ancrage tel que décrit précédemment, comprenant un corps principal et au moins deux paires d'orifices d'ancrage pour recevoir et ancrer des extrémités d'une paire d'armatures.

D'autres aspects, buts et avantages de l'invention apparaîtront à la lecture de la description suivante de plusieurs modes de réalisation de l'invention, donnés à titre d'exemples non limitatifs. L'invention sera également mieux comprise en regard des dessins joints sur lesquels :
- la figure 1 est une vue schématique en perspective d'un système de cerclage avec son dispositif d'ancrage selon l'invention,
- la figure 2 est une vue en coupe transversale du dispositif d'ancrage de la figure 1, la figure 2A montre plus en détail un des ancrages d'extrémité,
- la figure 3 illustre en coupe transversale les efforts exercés par le système de cerclage de la figure 1,
- la figure 4 est une vue de dessus du dispositif d'ancrage,
- la figure 5 est une vue schématique géométrique en coupe transversale du dispositif d'ancrage de la figure 1,
- la figure 6 est analogue à la figure 5 et représente un second mode de réalisation du dispositif,
- les figures 7 et 8 montrent des vues en perspective de l'entretoise,
- la figure 9 montre une vue en coupe d'une armature.

Sur les différentes figures, les mêmes références désignent des éléments identiques ou similaires.

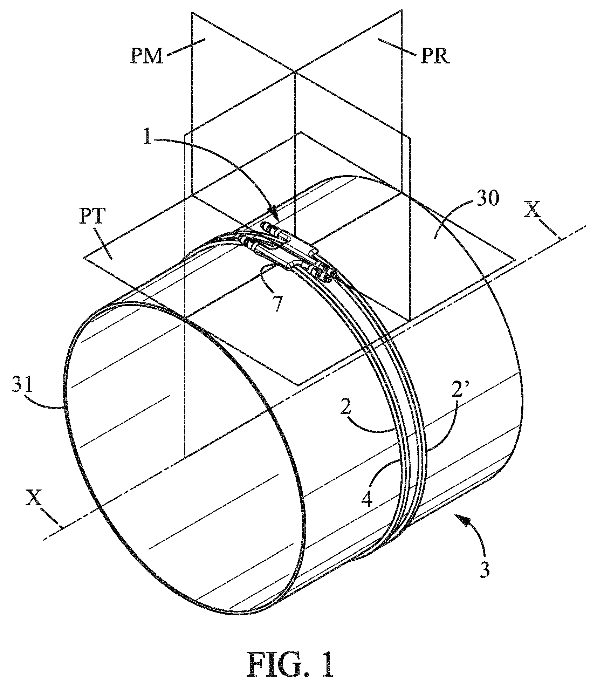

La figure 1 est une vue schématique représentant une portion de structure tubulaire 3 autour de laquelle on souhaite appliquer une contrainte de serrage au moyen d'un système de cerclage. En particulier, on souhaite appliquer une contrainte radiale dirigée vers l'intérieur pour consolider la structure en question. Dans l'exemple illustré, cette structure tubulaire est cylindrique de révolution centrée autour d'un axe X. La paroi 31 de la structure tubulaire est relativement peu épaisse en regard du diamètre de la structure, et par conséquent, on cherchera à répartir de la façon la plus homogène possible les efforts radiaux vers l'intérieur appliqués sur la surface extérieure 30 de la structure, et à éviter une singularité au niveau de l'ancrage.

Bien sûr, dans des configurations non représentées ici, la structure tubulaire ne pourrait être que partiellement cylindrique ; de même le cylindre n'est pas forcément de révolution, la courbe de base du cylindre pourrait être ovoïde, elliptique ou de tout autre forme convexe fermée.

L'exemple illustré montre une conduite tubulaire creuse ayant une paroi 31 peu épaisse, cette paroi pouvant être typiquement métallique. Il peut s'agir d'une conduite de liquide ou de gaz dans laquelle il peut régner une pression importante, d'où l'intérêt d'appliquer une précontrainte de cerclage pour éviter ou limiter l'apparition de contraintes de traction néfastes à l'intérieur de la paroi 31 de la conduite tubulaire.

À cette fin, on entoure la surface extérieure 30 de la structure tubulaire 3 avec deux armatures 2,2' dont la constitution sera précisée plus loin ; de façon avantageuse, la deuxième armature 2' est disposée symétriquement vis-à-vis de la première armature 2 par rapport à un plan médian référencé PM, perpendiculaire à l'axe X de la structure 3.

Chacune des armatures 2,2' comporte une portion principale 4, dite de serrage, qui entoure la structure et porte sur la surface 30 de la structure à contraindre sur 2 tours dans l'exemple présenté.

Plus généralement, chaque armature peut faire N tours autour de la surface extérieure de la structure, N étant un entier non nul. N peut valoir 1, 2, 3 ou plus.

L'armature 2 comprend d'une part une première portion d'extrémité 5 qui prolonge la portion principale d'un premier côté, et qui se termine par une première extrémité 21. L'armature 2 comprend d'autre part une seconde portion d'extrémité 6 qui prolonge la portion principale d'un deuxième côté, et qui se termine par une seconde extrémité 22.

Les première et seconde portions d'extrémité 5,6 se retrouvent au niveau d'une entretoise 1 prévue pour former un dispositif d'ancrage pour les armatures, en venant s'interposer entre leurs extrémités.

Plus précisément, la première extrémité 21 est ancrée dans un premier orifice d'ancrage 11 ménagé dans l'entretoise 1, et la seconde extrémité 22 est ancrée dans un second orifice d'ancrage 12, également ménagé dans l'entretoise 1 mais du côté opposé selon la direction circonférentielle.

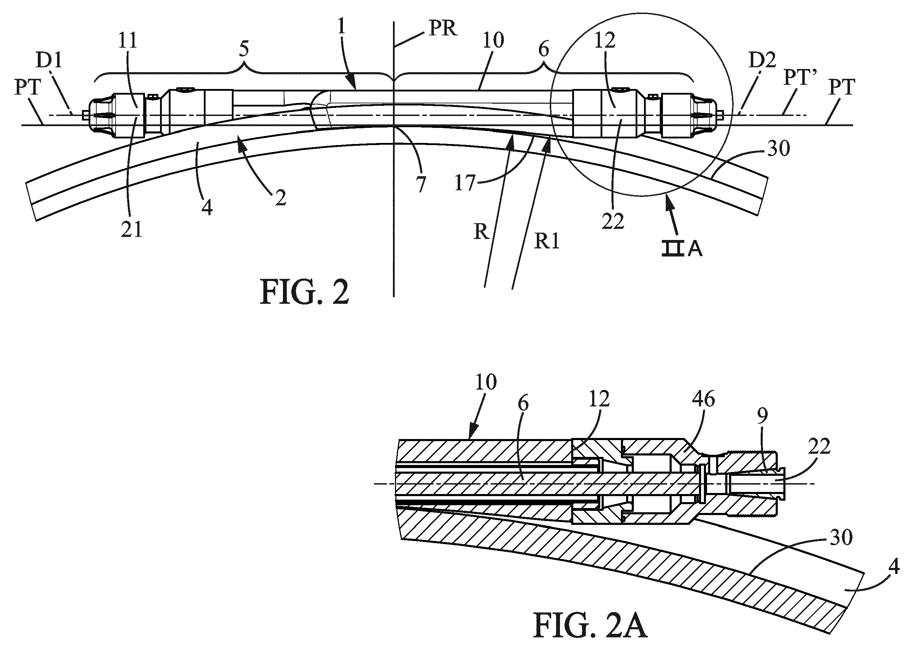

Dans le cas illustré, l'armature est un toron constitué de fils acier, de section sensiblement circulaire, comme connu en soi. Le dispositif et la méthode pour ancrer une telle armature dans un orifice d'ancrage fait classiquement appel à des mors coniques 9. Un tel dispositif et la méthode associée pour installer une précontrainte et ancrer l'armature sont décrits dans le document FR2822177. Dans l'exemple illustré (Fig 2a), on utilise une pièce d'appui intermédiaire repérée 46, interposée entre la portée des mors 9 et l'orifice d'ancrage 12 appartenant à l'entretoise 1. Un graissage, connu en soi, est également prévu pour la protection et la lubrification.

L'entretoise 1 se présente comme une pièce monobloc comprenant un corps 10 massif, avec les deux orifices d'ancrage susmentionnés 11,12 pour la première armature, et deux autres orifices d'ancrage 11',12' pour la deuxième armature 2' disposés de façon symétrique par rapport au plan médian d'armatures PM.

Étant donné que l'entretoise est symétrique par rapport audit plan médian PM, on va s'intéresser dans la suite essentiellement à la première armature 2 ; tout ce qui concerne la deuxième armature 2' et son ancrage pourra être déduit par effet miroir de la première armature 2 par rapport au plan médian PM.

L'entretoise 1 peut être fabriquée en métal par exemple en fonte ou en acier. Elle pourrait aussi être fabriquée en béton armé ou en matériau composite, ou tout autre matériau apte à supporter ces efforts d'ancrage.

L'entretoise 1 travaille essentiellement en compression (dans sa configuration rectiligne), car elle est interposée entre les extrémités d'armature 21,22 qui prolongent chacune au-delà d'un plan radial les portions d'extrémité 5,6 de l'armature.

On peut définir un plan de traction PT' comme un plan parallèle à l'axe X et passant par les portées respectives des premier 11 et second 12 orifices d'ancrage.

De plus, on peut définir un plan tangent PT comme un plan parallèle au plan de traction PT' et en outre adjacent à la surface 30 de la structure à contraindre.

On définit également un plan radial PR qui est perpendiculaire au plan tangent PT (et donc au plan de traction PT') et qui passe par l'axe X.

Il existe une autre façon de définir le plan radial PR. En effet, avantageusement selon l'invention, la première portion d'extrémité 5 s'étend depuis un lieu 7, que l'on peut définir comme appartenant au plan radial PR, où l'armature est tangente à la surface 30 puis s'écarte de là depuis ledit lieu 7 (définissant le plan radial PR avec l'axe X) jusqu'au premier orifice d'ancrage 11, et la seconde portion d'extrémité 6 s'étend, à l'opposé de la première, depuis ledit plan radial PR où l'armature est tangente à la surface 30 puis s'écarte de la surface depuis ledit plan radial PR jusqu'au second orifice d'ancrage 12.

En d'autres termes, le plan radial PR correspond à et coïncide avec une génératrice externe 7 de la surface cylindrique 30 à l'endroit de laquelle chacune des portions d'extrémité « décolle » de la surface de façon tangentielle vers des directions opposées en se croisant dans la direction circonférentielle.

Une autre façon de définir le plan tangent PT déjà mentionné consiste à déterminer un plan perpendiculaire au plan radial PR et passant par la génératrice externe 7 susmentionnée.

On obtient en corollaire le résultat suivant : la portion principale 4 fait exactement deux tours (ni plus, ni moins) au contact de la surface de la structure, et s'en écarte au niveau du plan tangent PT.

Bien que les illustrations présentent des configurations dites 'équilibrées', dans lequel le plan radial PR se situe à mi-distance des premier 11 et deuxième 12 orifices d'ancrage, il n'est pas exclu d'avoir une dissymétrie par rapport au plan radial PR avec un des orifices d'ancrage plus éloigné d'un côté, ce qui permet de favoriser l'accès d'un outillage de mise en contrainte autour de cet orifice d'ancrage plus éloigné.

Avantageusement selon l'invention, compte tenu de la configuration géométrique présentée, la résultante des forces qu'exercent les deux portions d'extrémité 5,6 sur l'entretoise peut se déduire des forces subies par les deux portions d'extrémité au niveau de ce plan radial PR ; à cet endroit elles sont purement de direction axiale selon les armatures sans composante radiale sur la structure. Par conséquent la résultante de ces forces n'induit aucune composante radiale substantielle qui provoquerait un appui significatif de l'entretoise sur la surface de la structure soumise à contrainte.

Comme ceci ressort des figures 2-6, le premier orifice d'ancrage 11 permet de définir un premier axe d'ancrage noté D1, et le second orifice d'ancrage 12 permet de définir un second axe d'ancrage noté D2.

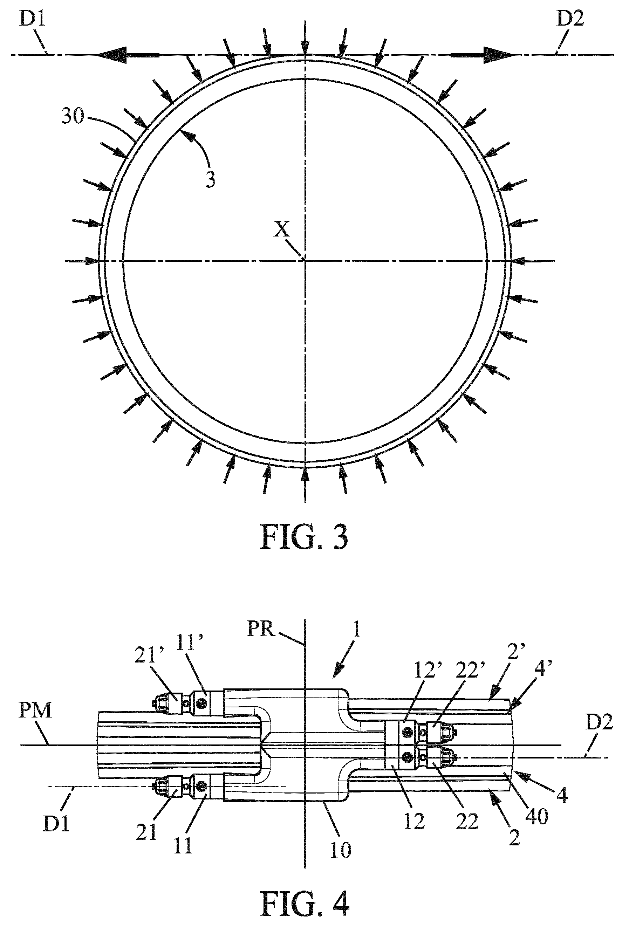

Comme illustré à la figure 3, on obtient alors une composante radiale d'effort tout à fait homogène et sensiblement uniforme sur toute la périphérie de la structure à contraindre, sans singularité (effort radial ou ponctuel concentré) au niveau du dispositif d'ancrage.

Comme illustré à la figure 4, la deuxième armature 2' est symétrique de la première armature 2 par rapport au plan médian PM, ainsi que sa portion principale 4' et ses extrémités 21',22' respectivement symétriques de la portion principale 4 et extrémités 21,22 de la première armature 2. Il en est de même pour les orifices d'ancrage 11',12' pour la deuxième armature, qui sont symétriques des orifices d'ancrage déjà mentionnés 11,12 pour la première armature 2.

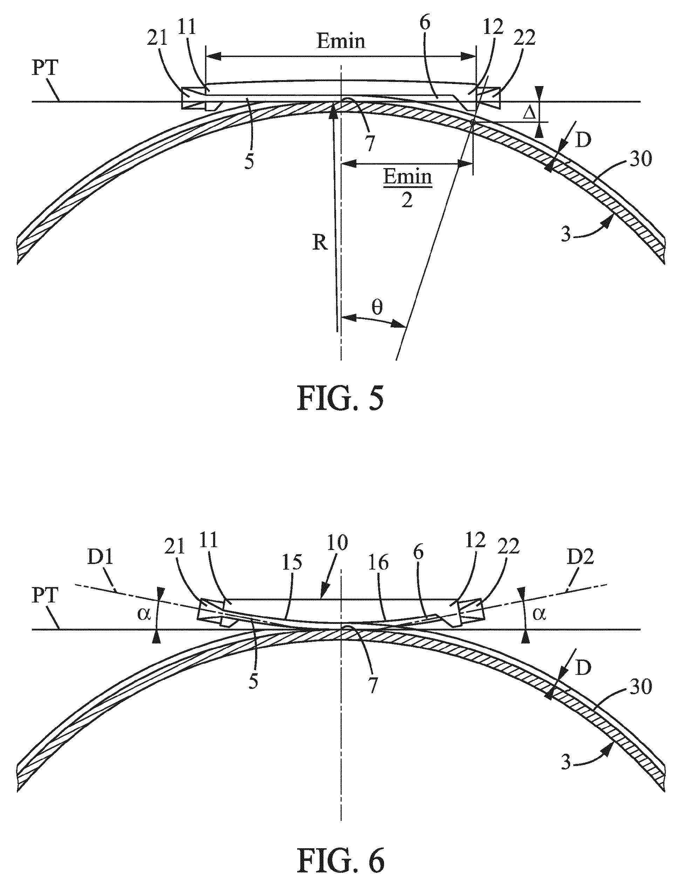

Comme illustré à la figure 5, on prévoit que les orifices d'ancrage soient positionnés à une certaine distance du plan radial PR de manière à obtenir un espace suffisant autour de chaque orifice pour installer l'outillage de traction (mise en tension des armatures). Plus précisément, les premiers et seconds orifices d'ancrage sont espacés d'une distance Emin choisie suffisamment grande, compte tenu du rayon de courbure R de la structure 3 au voisinage du plan radial PR et du diamètre extérieur D de l'armature 2, pour qu'on dispose, entre l'orifice d'ancrage 11, 12 et la paroi de la structure couverte par l'armature, d'un intervalle Δ permettant de mettre en place et d'actionner l'outillage de mise en tension de l'armature.

Comme illustré à la figure 6, il n'est pas obligatoire d'avoir les axes d'ancrage D1, D2 colinéaires entre eux et parallèles au plan tangent PT. En effet, dans cette variante, l'entretoise présente une face extérieure courbe convexe avec une première portion convexe 15 correspondant à la portée de la première portion d'extrémité de l'armature et une deuxième portion convexe 16 correspondant à la portée de la deuxième portion d'extrémité de l'armature. La condition de tangence au niveau du lieu de tangence 7 reste vérifiée sans pour autant que les axes d'ancrage soient parallèles au plan tangent. En l'occurrence, chacun des axes d'ancrage est angulairement espacé du plan tangent d'un angle α inférieure à 30°. De préférence on choisira l'angle α compris entre 0° et 20°.

Comme illustré aux figures 2, 7 et 8, l'entretoise présente une face inférieure 17, à savoir la face tournée vers la structure à renforcer, avec une forme concave.

La face concave 17 tournée vers la structure à contraindre présente un rayon de courbure R1 supérieur ou égal au rayon de courbure R de la surface de la structure 30 au voisinage du plan tangent. De cette manière, on évite toute contrainte localisée pendant la mise en place et pendant la phase de mise en précontrainte.

Toutefois, il est également possible d'avoir une surface intérieure plate, voire une surface intérieure courbe comme cela apparaît sur la figure 6.

Le corps principal 10 de l'entretoise comprend une gorge 8 qui forme un passage libre pour la portion médiane 40 de l'armature qui ne fait que passer sans être ancrée. On remarque que chacune des gorges 8,8' est disposée axialement entre les premier et second orifices d'ancrage.

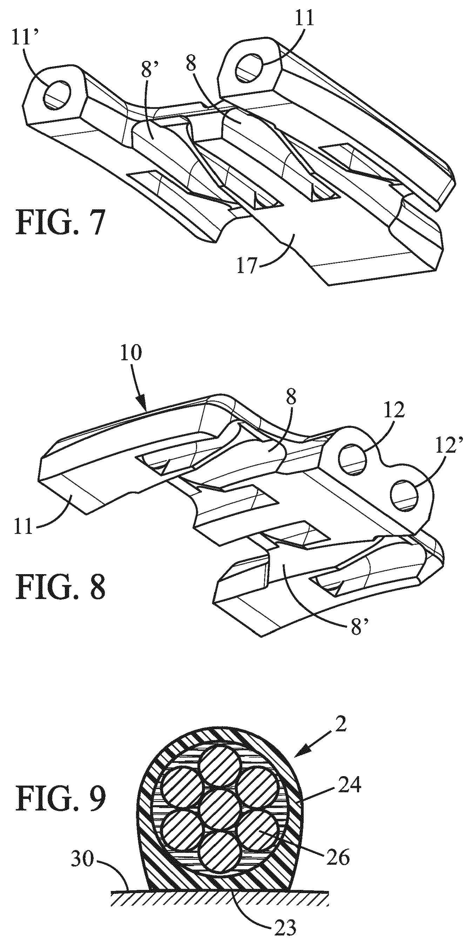

Comme illustré à la figure 9 et connu en soi, l'armature 2 illustrée comprend par exemple sept fils métalliques 26 protégés par une gaine 24 laquelle peut être graissée intérieurement. Une gaine de protection générale peut être adjointe à l'armature gainée et graissée. Dans ce cas, on peut injecter un produit de remplissage et de protection (type coulis de ciment) entre ladite gaine générale extérieure et le toron gainé. Dans cette configuration, l'injection est réalisée avant la mise en tension des armatures. En outre, la gaine de protection individuelle de l'armature peut présenter un méplat 23 d'appui destiné à venir porter sur la surface extérieure.

Il faut remarquer que, en lieu et place des armatures illustrées, on pourrait utiliser des armatures composites, de même section ou non, voire des sangles, lesquelles seraient tendues et ancrées au moyen de tambours à cliquet, ou au moyen de systèmes de mors plats. Dans ce cas de figure, les orifices d'ancrage seraient remplacés par une notion plus générale de « portées d'ancrage » sur lesquelles s'appuieraient les tambours à cliquet ou les mors plats, ces portées d'ancrage pourraient se présenter comme des fentes à épaulement, des paliers ou autres formes ayant la fonction de surface de retenue.

De même, les armatures illustrées peuvent être uniquement constituées de torons à 7 fils métalliques nus sans gaine individuelle. Il n'est pas non plus obligatoire qu'elles soient contenues dans une gaine générale, en fonction de l'environnement et du besoin. Ou encore toute autre alternative parmi les cas décrits précédemment (armatures nues dans une gaine générale par exemple).

Il faut aussi noter qu'une entretoise donnée peut convenir pour maints dispositifs d'ancrage placés sur des structures variées avec notamment des rayons de courbure R différents voire très différents.

Pour une conduite à précontraindre sur une certaine longueur, on dispose à intervalles réguliers plusieurs systèmes de cerclage le long de la conduite.

## Revendications

1. Dispositif d'ancrage d'au moins deux armatures (2,2') de précontrainte pour appliquer une contrainte de cerclage à une structure tubulaire à contraindre (3), au moins partiellement cylindrique d'axe X, chacune des armatures présentant :
- une portion principale (4) de serrage qui entoure et porte sur la surface (30) de la structure à contraindre sur N tours, N étant un entier non nul,
- une première extrémité (21) agencée au bout d'une première portion d'extrémité (5) qui prolonge la portion principale d'un côté, et
- une seconde extrémité (22) agencée au bout d'une deuxième portion d'extrémité (6) qui prolonge la portion principale d'un autre côté,
le dispositif d'ancrage comportant une entretoise d'ancrage (1) comprenant un corps principal (10) et au moins deux paires d'orifices d'ancrage pour recevoir et ancrer les deux extrémités (21,22) de chaque armature, la première extrémité (21) étant ancrée dans une première portée d'ancrage (11), et la seconde extrémité (22) étant ancrée dans une seconde portée d'ancrage (12), l'entretoise (1) étant agencée symétriquement de part et d'autre d'un plan médian (PM) de l'entretoise disposé perpendiculairement à l'axe X,
**caractérisé en ce que** la première portion d'extrémité (5) s'étend depuis un plan radial (PR), parallèle à l'axe X, où l'armature est tangente à la surface (30) de la structure puis s'écarte de la surface de la structure depuis ledit plan radial (PR) jusqu'à la première portée d'ancrage (11), et la seconde portion d'extrémité (6) s'étend, à l'opposé de la première, depuis le plan radial (PR) où l'armature est tangente à la surface (30) de la structure puis s'écarte de la surface de la structure depuis ledit plan radial (PR) jusqu'à la seconde portée d'ancrage (12).

2. Dispositif d'ancrage selon la revendication 1, dans lequel le plan radial (PR) se trouve à mi-distance des première et seconde portées d'ancrage (11,12).

3. Dispositif d'ancrage selon l'une quelconque des revendications précédentes, dans lequel on définit un plan tangent (PT) perpendiculaire aux plans médian et radial et adjacent à la surface (30) de la structure, et dans lequel la première portée d'ancrage présente un premier orifice d'ancrage (11) centré sur un premier axe d'ancrage (D1) et la seconde portée d'ancrage présente un second orifice d'ancrage (12) centré sur un second axe d'ancrage (D2), les premier et second axes d'ancrage (D1, D2) étant angulairement espacés du plan tangent (PT) au plus d'un angle de 30 degrés.

4. Dispositif d'ancrage selon la revendication 3, dans lequel les premier et second axes d'ancrage (D1,D2) sont colinéaires et parallèles au plan tangent (PT).

5. Dispositif d'ancrage selon la revendication 3, dans lequel les premier et second axes d'ancrage (D1,D2) sont agencés à l'opposé de la structure à protéger par rapport au plan tangent, angulairement espacés par rapport au plan tangent d'un angle compris entre 0° et 20°.

6. Dispositif d'ancrage selon l'une quelconque des revendications précédentes, dans lequel le corps de l'entretoise présente une face concave (17) tournée vers la structure à contraindre, avec un rayon de courbure (R1) supérieur ou égal au rayon de courbure (R) de la surface de la structure au voisinage du plan tangent.

7. Dispositif d'ancrage selon l'une quelconque des revendications précédentes, dans lequel chaque armature (2,2') est un toron métallique à 7 fils, entouré d'au moins une gaine extérieure (24) portant sur la surface (30) à contraindre, avec un produit de lubrification interposé qui permet au toron de coulisser facilement par rapport à ladite gaine extérieure.

8. Dispositif d'ancrage selon l'une quelconque des revendications précédentes, dans lequel chaque armature peut faire deux tours soit N=2, et le corps principal de l'entretoise comprend une gorge (8) formant passage disposée axialement entre les premier et second orifices d'ancrage.

9. Dispositif d'ancrage selon l'une quelconque des revendications précédentes, dans lequel l'entretoise (1) est une pièce monobloc métallique, par exemple en fonte.

10. Entretoise d'ancrage (1) spécialement apte et destinée à former un dispositif d'ancrage selon l'une quelconque des revendications précédentes, comprenant un corps principal et au moins deux paires d'orifices d'ancrage pour recevoir et ancrer des extrémités d'une paire d'armatures.

## Patentansprüche

1. Verankerungsvorrichtung zum Verankern von mindestens zwei Vorspannbewehrungen (2, 2'), um einen kreisförmigen Zwang auf eine einzuzwängende rohrförmige Struktur (3), die zumindest teilweise achsenzylindrisch um eine Achse X ist, anzulegen, wobei jede der Bewehrungen aufweist:
- einen Spann-Hauptabschnitt (4), der in N Wicklungen, wobei N eine ganze Zahl ungleich Null ist, die Oberfläche (30) der einzuzwängenden Struktur umgibt und kontaktiert,
- ein erstes Ende (21), das am Ende eines ersten Endabschnitts (5) angeordnet ist, der den Hauptabschnitt an einer Seite verlängert
- ein zweites Ende (22), das am Ende eines zweiten Endabschnitts (6) angeordnet ist, der den Hauptabschnitt an der anderen Seite verlängert,
wobei die Verankerungsvorrichtung eine Verankerungsstrebe (1) aufweist, die einen Hauptkörper (10) und mindestens zwei Paare Verankerungsöffnungen zur Aufnahme und Verankerung der beiden Enden (21, 22) jeder Bewehrung aufweist, wobei das erste Ende (21) in einem ersten Verankerungsbereich (11) verankert ist und das zweite Ende (22) in einem zweiten Verankerungsbereich (12) verankert ist, wobei die Strebe (1) beiderseits einer zur Achse X senkrechten medianen Ebene (PM) der Strebe symmetrisch gestaltet ist,
**dadurch gekennzeichnet, dass** sich der erste Endabschnitt (5) ab einer zur Achse X parallelen radialen Ebene (PR), wo die Bewehrung tangential zur Oberfläche (30) der Struktur ist, erstreckt und sich dann ab der radialen Ebene (PR) bis zu dem ersten Verankerungsbereich (11) von der Oberfläche der Struktur entfernt, und sich der zweite Endabschnitt (6) ab der radialen Ebene (PR), wo die Bewehrung tangential zur Oberfläche (30) der Struktur ist, in entgegengesetzte Richtung zum ersten Endabschnitt erstreckt und sich dann ab der radialen Ebene (PR) bis zu dem zweiten Verankerungsbereich (12) von der Oberfläche der Struktur entfernt.

2. Verankerungsvorrichtung nach Anspruch 1, wobei die radiale Ebene (PR) sich auf halber Strecke zwischen dem ersten und dem zweiten Verankerungsbereich (11, 12) befindet.

3. Verankerungsvorrichtung nach einem der vorstehenden Ansprüche, wobei eine Tangentenebene (PT) definiert ist, die senkrecht zu der medianen und zu der radialen Ebene ist und angrenzend an die Oberfläche (30) der Struktur ist, und wobei der erste Verankerungsbereich eine um eine erste Verankerungsachse (D1) zentrierte erste Verankerungsöffnung (11) aufweist und der zweite Verankerungsbereich eine um eine zweite Verankerungsachse (D2) zentrierte zweite Verankerungsöffnung (12) aufweist, wobei die erste und die zweite Verankerungsachse (D1, D2) in einem Winkelabstand von der Tangentenebene (PT) angeordnet sind, der maximal 30 Grad beträgt.

4. Verankerungsvorrichtung nach Anspruch 3, wobei die erste und die zweite Verankerungsachse (D1, D2) auf einer Linie liegen und parallel zu der Tangentenebene (PT) sind.

5. Verankerungsvorrichtung nach Anspruch 3, wobei die erste und die zweite Verankerungsachse (D1, D2) auf der bezüglich der Tangentenebene gegenüberliegenden Seite der zu schützenden Struktur angeordnet sind und in einem Winkelabstand bezüglich der Tangentenebene angeordnet sind, der zwischen 0° und 20° beträgt.

6. Verankerungsvorrichtung nach einem der vorstehenden Ansprüche, wobei der Körper der Strebe eine der einzuzwängenden Struktur zugewandte konkave Fläche (17) mit einem Krümmungsradius (R1) aufweist, der größer oder gleich dem Krümmungsradius (R) der Oberfläche der Struktur in der Umgebung der Tangentenebene ist.

7. Verankerungsvorrichtung nach einem der vorstehenden Ansprüche, wobei jede Bewehrung (2, 2') eine Metalllitze mit 7 Drähten ist, die von mindestens einer Außenhülle (24) umgeben ist, die an der einzuzwängenden Struktur trägt, wobei ein dazwischen befindliches Schmiermittel ein leichtes Gleiten der Litze bezüglich der Außenhülle erlaubt.

8. Verankerungsvorrichtung nach einem der vorstehenden Ansprüche, wobei jede Bewehrung zwei Umläufe machen kann, so dass N=2, und der Hauptkörper der Strebe eine Auskehlung (8) aufweist, die eine Rille bildet und axial zwischen der ersten und der zweiten Verankerungsöffnung angeordnet ist.

9. Verankerungsvorrichtung nach einem der vorstehenden Ansprüche, wobei die Strebe (1) ein metallisches Blockgussstück, zum Beispiel aus Gusseisen, ist.

10. Verankerungsstrebe (1), die speziell geeignet und bestimmt ist, eine Verankerungsvorrichtung nach einem der vorstehenden Ansprüche zu bilden, wobei die Verankerungsstrebe einen Hauptkörper und mindestens zwei Paare von Verankerungsöffnungen zur Aufnahme und Verankerung von Enden eines Paars von Bewehrungen aufweist.

## Claims

1. Device for anchoring at least two prestress reinforcements (2, 2') for applying a hooping stress to a tubular structure (3) to be stressed, which structure is at least partially cylindrical having an axis X, each of the reinforcements having:
- a main binding portion (4) which surrounds and bears against the surface (30) of the structure to be stressed over N turns, N being a non-zero integer,
- a first end (21) arranged at the end of a first end portion (5) in the extension of the main portion on one hand, and
- a second end (22) arranged at the end of a second end portion (6) in the extension of the main portion on the other hand,
the anchoring device comprising a spacer for anchoring (1) comprising a main body (10) and at least two pairs of anchoring openings for receiving and anchoring the two ends (21,22) of each reinforcement, the first end (21) being anchored in a first anchoring attachment (11), and the second end (22) being anchored in a second anchoring attachment (12), the spacer (1) being arranged symmetrically on either side of a median plane (PM) of the spacer arranged perpendicular to the axis X,
**characterized in that** the first end portion (5) extends from a radial plane (PR), parallel to the axis X, where the reinforcement is tangential to the surface (30) of the structure, then extends away from the surface of the structure from said radial plane (PR) as far as the first anchoring attachment (11), and the second end portion (6) extends, counter to the first end portion, from the radial plane (PR) where the reinforcement is tangential to the surface (30) of the structure, then extends away from the surface of the structure from said radial plane (PR) as far as the second anchoring attachment (12).

2. Anchoring device according to Claim 1, in which the radial plane (PR) is halfway between the first and second anchoring attachments (11,12).

3. Anchoring device according to any of the preceding claims, in which a tangential plane (PT) is defined perpendicular to the median and radial planes and adjacent to the surface (30) of the structure, and in which the first anchoring attachment has a first anchoring opening (11) centred on a first anchoring axis (D1) and the second anchoring attachment has a second anchoring opening (12) centred on a second anchoring axis (D2), the first and second anchoring axes (D1, D2) being angularly spaced from the tangential plane (PT) at most by an angle of 30 degrees.

4. Anchoring device according to Claim 3, in which the first and second anchoring axes (D1, D2) are collinear and parallel to the tangential plane (PT).

5. Anchoring device according to Claim 3, in which the first and second anchoring axes (D1, D2) are arranged away from the structure to be protected with respect to the tangential plane, angularly spaced with respect to the tangential plane by an angle between 0° and 20°.

6. Anchoring device according to any of the preceding claims, in which the body of the spacer has a concave face (17) oriented toward the structure to be stressed, with a radius of curvature (R1) greater than or equal to the radius of curvature (R) of the surface of the structure close to the tangential plane.

7. Anchoring device according to any of the preceding claims, in which each reinforcement (2, 2') is a metal strand having 7 wires, surrounded by at least one outer sheath (24) bearing against the surface (30) to be stressed, with a lubricating product therebetween which allows the strand to slide easily with respect to said outer sheath.

8. Anchoring device according to any of the preceding claims, in which each reinforcement may perform two turns, thus N=2, and the main body of the spacer comprises a channel (8) forming a passage arranged axially between the first and second anchoring openings.

9. Anchoring device according to Claim 1, in which the spacer (1) is a one-piece metal part, for example made of cast iron.

10. Anchoring spacer (1) specially suited to and designed for forming an anchoring device according to any of the preceding claims, comprising a main body and at least two pairs of anchoring openings for receiving and anchoring ends of a pair of reinforcements.
